# EUROPÄISCHE PATENTSCHRIFT

(11) **EP 2 062 040 B1**
(45) Veröffentlichungstag und Bekanntmachung des Hinweises auf die Patenterteilung: **02.04.2014**
(21) Anmeldenummer: 07819657.3
(22) Anmeldetag: 07.11.2007
(51) Int. Cl.: G01N 29/26, G01N 29/06

(54) **VERFAHREN UND VORRICHTUNG ZUR ZERSTÖRUNGSFREIEN PRÜFKÖRPERUNTERSUCHUNG MITTELS ULTRASCHALL LÄNGS EINER PRÜFKÖRPEROBERFLÄCHE**
METHOD AND DEVICE FOR NONDESTRUCTIVE TEST SPECIMEN EXAMINATION BY MEANS OF ULTRASOUND ALONG A TEST SPECIMEN SURFACE
PROCÉDÉ ET DISPOSITIF D'EXAMEN NON DESTRUCTIF D'ÉPROUVETTES AU MOYEN D'ULTRASONS LONGEANT UNE SURFACE DU CORPS DE L'ÉPROUVETTE

(30) Priorität: 15.12.2006 DE 102006059413
(43) Veröffentlichungstag der Anmeldung: 27.05.2009
(73) Patentinhaber: Fraunhofer-Gesellschaft zur Förderung der angewandten Forschung e.V., 80686 München (DE)
(72) Erfinder: KRÖNING, Michael, 66123 Saarbrücken (DE); BULAVINOV, Andrey, 66123 Saarbrücken (DE); REDDY, Krishna Mohan, 80686 München (DE); VON BERNUS, Ludwig, 91575 Windsbach (DE)
(74) Vertreter: Rösler, Uwe
(86) Internationale Anmeldenummer: PCT/EP2007/009647
(87) Internationale Veröffentlichungsnummer: WO 2008/071272

(56) Entgegenhaltungen:
- EP-A- 1 398 627
- WO-A-98/29036
- WO-A-2005/103675
- DE-A1-102004 059 856
- US-A- 5 024 094
- US-A- 5 474 072
- US-A- 5 549 002
- BERNUS L ET AL: "Sampling phased array - a new technique for signal processing and ultrasonic imaging" INSIGHT-NON-DESTRUCTIVE TESTING AND CONDITION MONITORING BRITISH INST. NON-DESTRUCTIVE TESTING UK, Bd. 48, Nr. 9, September 2006 (2006-09), Seiten 545-549, XP002482113 ISSN: 1354-2575

## Beschreibung

### Technisches Gebiet

Die Erfindung bezieht sich auf ein Verfahren zur zerstörungsfreien Prüfkörperuntersuchung mittels Ultraschall längs einer Prüfkörperoberfläche, die insbesondere nicht eben oder schräg ausgebildet ist, bei dem mit einem oder einer Vielzahl von Ultraschallwandlern Ultraschallwellen mittels eines Koppelmedium über die Prüfkörperoberfläche in den Prüfkörper eingekoppelt und innerhalb des Prüfkörpers reflektierte Ultraschallwellen von eine Vielzahl von Ultraschallwandlern über die Prüfkörperoberfläche und das Koppelmedium empfangen und in Ultraschallsignale umgewandelt werden, die der zerstörungsfreien Untersuchung zugrunde gelegt werden.

### Stand der Technik

Zur zerstörungsfreien Prüfkörperuntersuchung mittels Ultraschall gilt es möglichst verlustfrei Ultraschallwellen über eine Prüfkörperoberfläche in das Innere des Prüfkörpers einzukoppeln und im Inneren reflektierte Ultraschallwellenanteile mittels geeignet an der Prüfkörperoberfläche vorgesehene Ultraschallwandlern zu detektieren. Handelt es sich jedoch bei den Prüfkörpern um Prüfkörper mit komplexen Prüfkörperoberflächen, d.h. nicht ebenen, vorzugsweise gekrümmten oder schrägen Oberflächen, so ist eine verlustfreie Ein- und Auskoppelung von Ultraschallwellen in bzw. aus den Prüfkörper erforderliches planes Aufliegen einer Ultraschallwellenanordnung nur unter Verwendung entsprechend konfektionierter Vorsatzkeile möglich, durch deren spezielle Geometrien an der Prüfkörperoberfläche vorhandene Oberflächenkrümmungen kompensiert werden können, um auf diese Weise eine einwandfreie Ankopplung eines Ultraschallwandlers an die Oberfläche eines Prüfkörpers zu gewährleisten. Möchte man das Prüfobjekt jedoch möglichst in seinem gesamten Volumen untersuchen, so sind die Ultraschallwellen mit unterschiedlichen Einschallwinkeln in das Prüfobjekt über die Prüfobjektoberfläche einzukoppeln, um abhängig von der jeweiligen Prüfobjektgeometrie der innerhalb des Prüfobjektes vorhandenen Fehlertypen hinsichtlic ihrer geometrischen Lage sowie Reflexionseigenschaften möglichst optimale Prüfbedingungen zu erzielen. Dies bedeutet jedoch, dass die Anzahl der zu bevorratenden Vorsatzkeile sowie deren geometrischer Variantenreichtum sowie auch die für die Durchführung der Ultraschallmessung erforderliche Prüfzeit vergrößert werden muss. So kommt für jeden einzelnen Einschallwinkel und jede Oberflächenkrümmung ein neuer Vorsatzkeil zum Einsatz.

Als Alternative zur Verwendung jeweils an die Prüfkörperoberflächengeometrie angepaßte Vorsatzkeile bietet sich auch die Tauctechnik an, mit der Prüfobjekte mit gekrümmten Oberflächen im Wege der Ultraschallmesstechnik überprüft werden können. Der Prüfkörper wird hierbei ganz oder teilweise in ein in der Regel aus Wasser bestehendes Koppelmittel getaucht, wobei die Ultraschallkopplung zwischen dem Ultraschallwandler und der Prüfkörperoberfläche über eine Wasservorlaufstrecke erfolgt. Der Vorteil dieser Technik besteht in einem sehr stabilen akustischen Kontakt zwischen Ultraschallwandler und Prüfkörperoberfläche. Gilt es auch in diesem Fall möglichst das Prüfobjekt gesamtheitlich zu untersuchen, so sind Ultraschallwellen in unterschiedlichen Einschallwinkeln über die Prüfkörperoberfläche in den Prüfkörper einzukoppeln. Dies erfolgt entweder durch Vorsehen mehrerer unterschiedlich zueinander geneigter Ultraschallwandler relativ zur Oberfläche oder durch eine mechanische Verstellung der jeweils im Einsatz befindlichen Ultraschallwandler. Es liegt auf der Hand, dass die vorstehend erläuterten Vorgehensweisen bei der zerstörungsfreien Prüfkörperuntersuchung mittels Ultraschalltechnik in bezug auf den technischen und Zeitaufwand verbesserungsdürftig sind.

Eine entscheidende Weiterentwicklung in der auf Ultraschall basierenden zerstörungsfreien Prüfkörperuntersuchung bietet das sogenannte Phased-Array-Verfahren, bei dem arrayförmig an der Prüfkörperoberfläche angeordnete Ultraschallwandler phasenverschoben, d.h. zeitversetzt, zur Aussendung von Ultraschallwellen angeregt werden. Ein artverwandtes Verfahren wird z.B. in Bernns et al, Insight-Non-Destructive Testing and Condition Monitoring, 48(9), 545-579 offenbart. Durch entsprechende Wahl des Zeitversatzes kommt es in einem bestimmten Volumenbereich innerhalb des Prüfkörpers zu einer konstruktiven Überlagerung der eingekoppelten Ultraschallwellen nach dem Huygensschen Prinzip. Um eine möglichst optimale konstruktive Überlagerung der Ultraschallwellen in einem Volumenbereich von Interesse zu erzielen, sind die einzelnen als Ultraschallsender arbeitenden Ultraschallwandler mit identischen Signalformen anzuregen. Neben der Fokussierung der Ultraschallwellen auf einen bestimmten Volumenbereich innerhalb des Prüfkörpers ist ebenso möglich durch entsprechende Wahl der Phasenverschiebung bei der Ansteuerung der arrayförmig angeordneten Ultraschallwandler eine einheitliche Einschallrichtung der Ultraschallwellen in den Prüfkörper vorzugeben. Damit können beliebig schwenkbare Ultraschallfelder in einen Prüfkörper generiert werden. Grundsätzlich läßt sich mit Hilfe des Phased-Array-Verfahrens die Prüfzeit im Vergleich zur eingangs erläuterten Vorgehensweise bezgl. der Verwendung eines einzigen Ultraschallwandlers, dessen Neigung relativ zur Oberfläche mittels entsprechender Lageveränderung variierbar ist, wesentlich verkürzen. Trotzdem werden bei der Prüfung von Prüfobjekten von komplizierten Oberflächengeometrien auch Vorsatzkeile benötigt, um eine möglichst verlustfreie Einkopplung in den Prüfkörper zu gewährleisten, wodurch wiederum die Durchführung der Ultraschallprüfung und die Auswertung von - Ultraschallprüfergebnissen erschwert wird, vornehmlich durch das Auswechseln und Vorsehen von Vorsatzkeilen für entsprechende Geometriekonturen auf der Prüfkörperoberfläche sowie Neukalibrierung des Ultraschallwandlersystems für jeden einzelnen neu eingebrachten Vorsatzkeil. Zudem ist es für eine entsprechende

Einstellung der Sende- und Empfangsverzögerungen innerhalb der einzelnen Ultraschallkanäle eines über einen Vorlaufkeil auf einen zu untersuchenden Prüfkörper aufsitzenden Ultraschallgruppenstrahlers erforderlich sehr genaue Kenntnisse über das Oberflächenprofil des Prüfkörpers sowie die an der Grenzfläche zwischen Vorsatzkeil und Prüfkörpermaterial vorhandenen Ultraschallbrechungseigenschaften zu haben. Dies wirft eine sehr aufwendige Simulationsprozedur mit anschließender Justierung des Ultraschallprüfsystems auf, die für jedes anderweitig geformtes Oberflächenprofil eines Prüfkörpers zu wiederholen ist.

Das gleiche Problem tritt analog bei der Tauchtechnikprüfung mit Ultraschallgruppenstrahlem auf.

Zusammenfassend kann daher festgehalten werden, dass sowohl bei der konventionellen Ultraschallprüfung mit Einzelschwingerprüfköpfen als auch bei der Gruppenstrahlerprüfung der Einsatz von Vorsatzkeilen mit viel Zeit- und Kostenaufwand verbunden ist. Auch bei der Prüfung in Tauchtechnik ist eine genaue Beschreibung des Oberflächenprofils für eine korrekte Justierung des Ultraschallprüfsystems unabdingbar. So ist es beispielsweise nicht möglich, Prüfkörper mit unbekannten Oberflächenprofilen mit ausreichender Zuverlässigkeit zu prüfen.

Handelt es sich bei den zu untersuchenden Prüfkörpern darüber hinaus um Prüfkörper mit aus akustisch anisotropen Werkstoffeigenschaften bestehenden Prüfkörpermaterialien, so kann bei den bis anhin in Anwendung befindlichen Ultraschallmesstechniken von der getroffenen Annahme, dass sich die Ultraschallwellen isotroper und mit gleichen Schallgeschwindigkeiten auszubreiten vermögen, nicht mehr ausgegangen werden. Da Ultraschallwellen innerhalb eines Prüfkörpers, in dem akustisch anisotrope Materialzusammensetzungen enthalten sind, an den Grenzflächen aneinander stoßender Materialschichten längs ihrer Ausbreitungsrichtung gebrochen werden, ist eine Ortung von möglicherweise innerhalb des Prüfkörpers nachzuweisender Fehler nahezu unmöglich, zumal der Schalllaufweg nicht mehr als geradlinig angenommen werden kann und somit die effektive Schallgeschwindigkeit unbestimmt ist. Eine mögliche Gruppenstrahlerprüfung an Prüfkörpern mit anisotropen Werkstoffeigenschaften ist daher nur dann denkbar, wenn die Ultraschalllaufzeiten von jedem einzelnen Gruppenstrahlerelement, d.h. Ultraschallwandler, zu jedem Punkt im Prüfkörpervolumen berücksichtigt werden kann, d.h. unterschiedliche Schallgeschwindigkeiten für unterschiedliche Ausbreitungsrichtungen in Betracht gezogen werden. Dies jedoch würde eine enorme Anzahl von Prüftakten und damit eine erhebliche Prüfzeit bedeuten. Noch komplizierter wird es zudem, wenn der Einsatz der vorstehend beschriebenen Vorsatzkeile aufgrund komplexer Prüfkörperoberflächengeometrien erforderlich wird oder bei der Prüfung in Tauchtechnik, wobei es gilt, Prüfkörper mit akustisch inhomogenen Werkstoffeigenschaften zu untersuchen. Derzeit werden jedoch die anisotropen Materialeigenschaften weitgehend vernachlässigt und zur Fehleruntersuchung von Prüfkörpern stets ein akustisch isotroper Fall angenommen. Dies führt jedoch zweifelsohne zu einer fehlerhaften Bildrekonstruktion und letztlich zu falschen Aussagen über einen untersuchten Prüfkörper.

### Darstellung der Erfindung

Der Erfindung liegt die Aufgabe zugrunde ein Verfahren zur zerstörungsfreien Prüfkörperuntersuchung mittels Ultraschall durch eine Prüfkörperoberfläche hindurch, die insbesondere nicht eben und/oder schräg ausgebildet ist, gemäß den Merkmalen des Oberbegriffes des Anspruches 1, derart weiterzubilden, dass der Verfahrens- und Zeitaufwand zur Durchführung von Prüfkörperuntersuchungen an Prüfkörpern mit komplexen Prüfkörperoberflächen erheblich reduziert werden soll. Zudem gilt es, die Messgenauigkeit sowie die damit verbundene Zuverlässigkeit der Prüfergebnisse entscheidend zu steigern.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Das lösungsgemäße Verfahren zeichnet sich im Wesentlichen durch folgende Verfahrensschritte aus. Wenigstens ein, vorzugsweise eine Vielzahl n einzelner, zu einem Gruppenstrahlerwandler zusammengefaßte Ultraschallwandler, die vorzugsweise in Art eines eindimensionalen Lineararrays oder eines zweidimensionalen Matrixarrays angeordnet sind, werden über ein Koppelmedium akustisch an die Prüfkörperoberfläche angekoppelt, so dass Ultraschallwellen zur freien räumlichen Ausbreitung innerhalb des Prüfkörpers eingekoppelt werden. Die innerhalb des Prüfkörpers reflektierten und über die Prüfkörperoberfläche sowie das Koppelmedium zurücklaufenden Ultraschallwellen werden mit einer Vielzahl m, die vorzugsweise der Gesamtzahl aller in Gruppenstrahlerwandler vorhandenen Ultraschallwandler entspricht, empfangen und es werden entsprechend m Ultraschallzeitsignale generiert, in denen zeitaufgelöst Amplitudeninformation enthalten sind. Die empfangenen Ultraschallzeitsignale werden nachfolgen abgespeichert und einer späteren Signalauswertung unterzogen.

Im Rahmen der Signalauswertung wird zunächst eine der Prüfkörperoberfläche zuordenbare Oberflächenkontur, über die die Ultraschallwellen in den Prüfkörpern ein- bzw. aus dem Prüferkörper ausgekoppelt werden, durch rechnerische Fokussierung der empfangenen Ultraschallwellen an wenigstens zwei Oberflächenpunkten der Prüfkörperoberfläche ermittelt. Es sei angenommen und zugleich vorausgesetzt, dass das Koppelmedium eine Schichttiefe aufweist, d.h. die Ultraschallwandler von der Prüfkörperoberfläche soweit beabstandet sind, so dass mittels Phased-Array-Technik eine räumliche Fokussierung der Ultraschallwellenzeitsignale auf die Prüfkörperoberfläche möglich wird, wodurch deren dreidimensionale Oberflächenkontur regelrecht abgetastet und somit erfasst werden kann.

In Kenntnis der auf vorstehende Weise ermittelten Oberflächenkontur des Prüfkörpers werden im Weiteren die abgespeicherten Ultraschallzeitsignale zur Rekonstruktion eines dreidimensionalen Volumenbildes, eines Sektorbildes in Form eines zweidimensionalen Ultraschallschnittbildes durch den Prüfkörper oder eines A-Bildes in Form eines eindimensionalen, längs eines vorgebbaren Einschallwinkels zeit- und ortsaufgelösten Ultraschallechosignals derart ausgewertet, dass eine durch die ermittelte Oberflächekontur hervorgerufene Inhomogenität im Schallausbreitungsverhalten der die Prüfkörperoberfläche passierenden Ultraschallwellen berücksichtigt wird. So treten an der Grenzfläche zwischen dem Koppelmedium und dem Prüfkörper die Ultraschallausbreitungsrichtung erheblich beeinflussende Brechungseffekte auf, die lösungsgemäß in Kenntnis des Konturverlaufes der Grenzfläche, d.h. der Oberflächenkontur des Prüfkörpers, berücksichtigt bzw. kompensiert werden können.

Sei angenommen, dass der Prüfkörper vollständig aus einem akustisch isotropen Material besteht, so erfahren die seitens der Ultraschallwandler ausgesandten Ultraschallwellen lediglich an der Grenzfläche zwischen dem Koppelmedium und dem Prüfkörper eine vom lokalen Krümmungsverhalten der Grenzfläche abhängige Brechung, die jedoch in Kenntnis der Prüfkörperoberflächenkontur bei der rekonstruktiven Auswertung der Ultraschallzeitsignale berücksichtigt werden kann.

In besonders vorteilhafter Weise eignet sich zur Ansteuerung der einzelnen zu einem Ultraschallgruppenschallwandler zusammengefaßten Ultraschallwandler ein aus der DE 10 2006 059 856 A1 entnehmbares Verfahren, das im Wesentlichen darin besteht, dass alle Ultraschallwandler des Gruppenstrahlers in zeitlicher Abfolge nacheinander im Rahmen einer Durchtaktung angeregt werden, wobei in jedem einzelnen Sendetakt sämtliche im Gruppenstrahler vorhandene Ultraschallwandler die zurückkommenden Ultraschallechosignale empfangen. Die auf diese Weise aufgenommenen Zeitsignale werden entsprechend gespeichert, so dass im Rahmen einer nachträglichen Auswertung der abgespeicherten Zeitsignale die eigentliche Vermessung des Prüfkörpers möglich wird. Die Auswertung der Ultraschallzeitsignale erfolgt sozusagen Offline mit Hilfe eines Rekonstruktionsalgorithmus, der unter Maßgabe eines virtuell vorgebbaren Einschallwinkels und/oder einer virtuellen Fokussierung der eingekoppelten Ultraschallwellen in den Prüfkörper ausgewählt und auf die abgespeicherten Ultraschallsignale angewendet wird. Mit Hilfe derartiger Rekonstruktionsalgorithmen können aus dem gespeicherten Ultraschallsignalen synthetisch dreidimensionale Abbilder der Beschallungs- bzw. Reflexionseigenschaften des Prüfkörpers errechnet werden, ohne dass es zusätzlicher weiterer Ultraschallmessungen bedarf. Ein derartiges Rekonstruktionsprinzip basiert auf der Anwendung der Synthetic Apperture Focussing Technology (SAFT), die darin besteht, dass alle empfangenen Ultraschallsignale auf eine gemeinsame Zeitachse projiziert werden. Dabei können alle von einem bestimmten Reflektor reflektierten Ultraschallsignale phasengleich addiert werden. Eine nachträgliche Rekonstruktion beliebiger Einschallwinkel ergibt sich durch eine phasenversetzte Addition der Empfangssignale von verschiedenen Ultraschallempfängern. Durch die Offline-Auswerkung ist man in der Lage, nahezu jeden Einschallwinkel synthetisch zu rekonstruieren und damit einen Ultraschallschwenk durch den Datensatz durchzuführen.

Handelt es sich, wie gleichfalls eingangs erwähnt, um Prüfobjekte, die zumindest in Teilbereichen aus akustisch anisotropen Werkstoffbereichen bestehen, so gilt es auch diesem Umstand entsprechend Rechnung zu tragen. Hierzu ist es erforderlich, die den akustisch anisotropen Werkstoffbereich beschreibenden, richtungsspezifischen Schallausbreitungseigenschaften zu ermitteln bzw. durch Rückgriff auf einen diesbezüglich bereits vorliegenden Datenbestand entsprechend bereitzustellen. Da das Schallausbreitungsverhalten von Schallwellen in anisotropen Werkstoffbereichen beispielsweise auf der Basis elastodynamischer Ansätze bereits im Detail verstanden und beschrieben werden kann, ist es möglich, diesbezügliche detaillierte Kenntnisse vorzugsweise im Rahmen experimenteller Untersuchungen über die schallakustischen Eigenschaften nahezu beliebigere anisotroper Prüfkörper zu gewinnen, um diese mittels geeigneter mathematischer Darstellungen, wie beispielsweise im Rahmen sogenannter Steifigkeitsmatrizen, für weiterführende Anwendungen verfügbar zu machen. Insbesondere können aus derartigen Steifigkeitsmatrizen richtungsspezifische Schallausbreitungsgeschwindigkeiten innerhalb jeweils zu untersuchender Prüfkörper entnommen werden.

Mit Hilfe dieser, die schallakustischen Eigenschaften eines zu untersuchenden Prüfkörpers beschreibenden Kenntnisse ist es möglich, durch Einkoppeln von Ultraschallwellen in den akustisch anisotropen Werkstoffbereich des Prüfkörpers und entsprechendem Empfang von im Inneren des Prüfkörpers reflektierten Ultraschallwellen mit einer Vielzahl von Ultraschallwandlern die hierdurch detektierten Ultraschallsignale richtungsselektiv unter Zugrundelegung der richtungsspezifischen Schallausbreitungseigenschaften auszuwerten. Wie vorstehend erwähnt, gilt es selbstverständlich den durch die Grenzfläche zwischen dem Koppelmedien und der Prüfkörperoberfläche hervorgerufenen Brechungseffekt mit zu berücksichtigen. Der Brechungseffekt kann aufgrund der lösungsgemäß vorher bestimmten Prüfkörperoberflächenkontur in seinem räumlichen Verhalten berechnet bzw. simuliert werden.

Bei der richtungsselektiven Ultraschallsignalauswertung werden die Phasenbeziehungen einzelner, von entsprechenden Reflexionsereignissen innerhalb des Prüfkörpers herrührenden Elementarwellen erfaßt. Der Empfang der Ultraschallwellen erfolgt gleichsam dem Aussenden und Einkoppeln von Ultraschallwellen in den Prüfkörper mittels eines Ultraschallwellen-Gruppenstrahlerprüfkopfes, wobei die richtungsselektive Ultraschallwellenauswertung unter Anwendung eines Signalauswerteverfahrens erfolgt, das im Weiteren erläutert wird. Unter Berücksichtigung der schallakustischen Anisotropie der Inhalt des Prüfkörpers vorhandene Werkstoffbereiche erfolgt letztlich eine Anpassung des auszuwertenden detektierten Ultraschallwellenfeldes derart, so dass eine quasi Standardprüfsituation geschaffen wird, wie sie auch bei der Auswertung von Ultraschallsignalen durchgeführt, die aus akustisch isotropen Prüfkörpern entstammen.

Hierzu werden Schalllaufzeiten berechnet, die jeweils eine Ultraschallwelle benötigt, vom Ort ihrer Entstehung, der dem Einkoppelort in das Koppelmedium entspricht, zu einem innerhalb eines zu rekonstruierenden Prüfkörperbereiches befindlichen Raumpunkt und zurück an den Ort eines Empfängers unter Berücksichtigung der anisotropen Werkstoffeigenschaften bzw. elastischen Materialkonstanten sowie der an der Grenzfläche zwischen Koppelmedium und Prüfkörper auftretenden Brechung. Weitere das Verfahren betreffende Einzelheiten können unter Bezugnahme auf die Ausführungsbeispiele entnommen werden.

Weitere Einzelheiten können der Beschreibung der Ausführungsbeispiele unter Bezugnahme auf die Zeichnungen entnommen werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Querschnitt durch einen Gruppenstrahler-Prüfkopf Koppelelement,
- Fig. 2a, b: Darstellung eines Einsatzes von Gruppenstrahler-Prüfköpfen an nicht parallelen oder gekrümmten Konturen,
- Fig. 4: Darstellung zur Erläuterung der Fassung der Oberflächenkontur eines Prüfkörpers, sowie

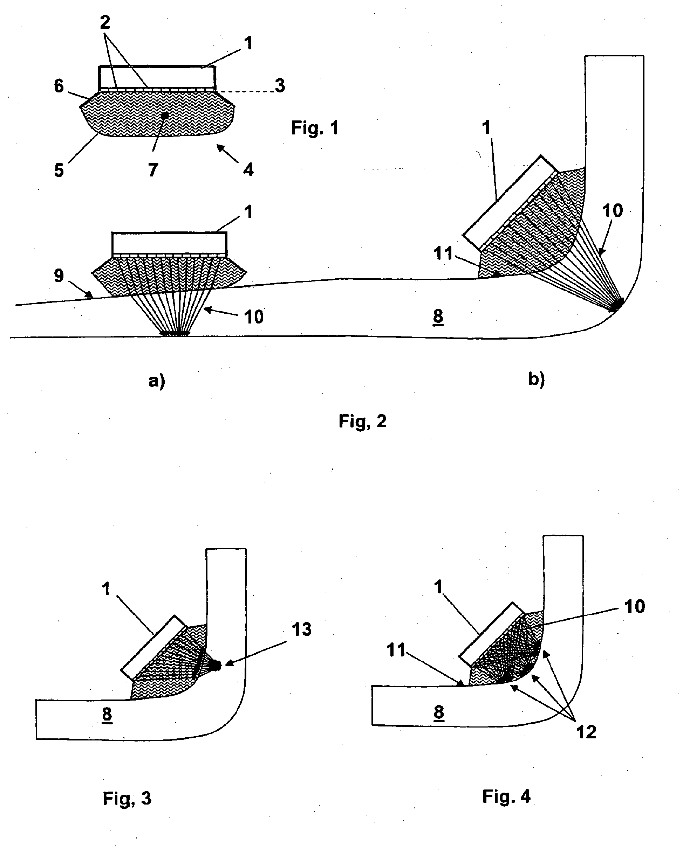

- Fig. 3: Darstellung zur virtuellen Fokussierung von Ultraschallwellen auf eine Materialungänze innerhalb eines Prüfkörpers.

### Wege zur Ausführung der Erfindung, gewerbliche Verwendbarkeit

Figur 1 zeigt einen stark schematisierten Querschnitt durch eine Vorrichtung zur zerstörungsfreien Prüfkörperuntersuchung mittels Ultraschall. Die Vorrichtung ist als Grupperstrahlerprüfkopf 1 ausgebildet, der eine Vielzahl arrayförmig angeordneter Ultraschallwandler 2 vorsieht, deren Schallein- bzw. -auskoppelflächen längs einer gemeinsamen Ebene 3 angeordnet sind. Bündig an die längs der gemeinsamen Ebene 3 angrenzenden Ultraschallwandler 2 ist ein kissenartig ausgebildetes Koppelelement 4 vorgesehen, das über eine flexible Oberfläche 5 verfügt. Das kissenartig ausgebildete Koppelelement 4 ist im Ausführungsbeispiel gemäß Figur 1 von starr ausgebildeten Wandbereichen 6 teilweise begrenzt, an die die flexibel ausgebildete Begrenzungswand 5, in Art einer flexiblen Haut, anschließt. Sowohl die Begrenzungswand 6 als auch die flexible Oberfläche 5 schließen ein inneres Volumen 7 ein, das vorzugsweise mit Wasser oder einem Gel befüllt ist. Die starr ausgebildete Begrenzungswand 6, die mit dem Gruppenstrahlerprüfkopf 1 einseitig verbunden ist, verhilft, wie die weiteren Ausführungsbeispiele erkennen lassen, einer verbesserten Handhabung und insbesondere einer räumlich ruhenden Positionierung der Gruppenstrahleranordnung 1 relativ zur Oberfläche eines Prüfkörpers. Selbstverständlich ist es möglich die Begrenzungswand 6 nicht vorzusehen und das Kissen unmittelbar im Bereich der Ebene 3 mit dem Gruppenstrahlerprüfkopfes 1 zu verbinden.

In Figur 2 ist ein Prüfkörper 8 dargestellt, der im Fallbeispiel gemäß Figur 2a einen keilförmigen Querschnitt aufweist. Die Prüfkörperoberfläche 9 ist in dem zu vermessenden Bereich gegenüber einer durch die Positionierung des Gruppenstrahlprüfkopfes 1 vorgegebenen Ebene 3 geneigt, d.h. nicht parallel zur Ebene 3. Das kissenartig ausgebildete Koppelelement 4 passt sich selbständig an die Prüfkörperoberflächenkontur 9 an und ermöglicht eine weitgehend verlustfreie Einkopplung der seitens des Gruppenstrahlerprüfkopfes 1 ausgesandten Ultraschallwellen 10 ohne Verwendung von bis anhin erforderlichen Koppelkeilen.

Im Falle der Figur 2b gilt es den Gruppenstrahler-Prüfkopf 1 längs einer gekrümmt verlaufenden Prüfkörperoberfläche 11 zu positionieren, so dass eine nahezu verlustfreie Ultraschallwelleneinkopplung in den Prüfkörper 8 ermöglicht wird. Hierzu passt sich gleichfalls das kissenartig ausgebildete Koppelelement 4 an die individuell gekrümmte Prüfkörperoberfläche 11 an.

Aus den beiden vorstehend gezeigten Ultraschallwellenverläufen bezüglich der Figuren 2a und 2b ist klar zu ersehen, dass an der jeweils durch die Prüfkörperoberfläche 9, 11 vorgegebene Grenzfläche zwischen Koppelelement und Prüfkörper 8 eine Brechung der Ultraschallwellen 10 auftritt. Gleichfalls kann den Figuren 2a und b entnommen werden, dass die mittels des Gruppenstrahlerprüfkopfes 1 erfaßten Ultraschallzeitsignale sowohl Informationen über die Grenzfläche zwischen dem Koppelmedium 4 und dem Prüfkörper 8 als auch über sämtliche innerhalb des Prüfkörpers 8 vorhandenen Ungänzen enthalten. Ohne Vorkenntnisse über den Verlauf bzw. die Kontur der Prüfkörperoberfläche 9, 10 ist man in der Lage durch rechnerische Fokussierung auf mehrere Punkte der Prüfkörperoberfläche 11 die Prüfkörperoberflächenkontur zu ermitteln. Hierzu sei auf die Bilddarstellung in Figur 4 verwiesen, in der eine rechnerische Fokussierung von Ultraschallwellenbündel 10 auf unterschiedliche Oberflächenpunkte 12 der Prüfkörperoberfläche 11 gerichtet sind. Erst in Kenntnis über die Oberflächenkontur der Prüfkörperoberfläche ist es möglich, eine Ultraschallbildrekonstruktion des zu prüfenden Prüfkörpers 8 unter Berücksichtigung der Inhomogenität durchzuführen, die von der Brechung an der Grenzfläche zwischen den Koppelmedium 4 und dem Prüfkörper 8 herrührt.
In diesem Zusammenhang sei auf die Bilddarstellung in Figur 3 verwiesen, in der eine innerhalb des Prüfkörpers 8 vorhandene Ungänze 13 vorgesehen ist, die durch entsprechende rechnerische Fokussierung der Ultraschallwellen auf den Bereich der Ungänze 13 detektierbar ist.

Handelt es sich bei dem Prüfkörper 8 um einen Prüfkörper, der zumindest akustisch anisotrope Materialanteil enthält, so ist es auch in diesem Fall möglich, die Materialungänze innerhalb eines derartigen Prüfkörpers exakt zu erfassen, indem die vorstehend beschriebene Technik unter Berücksichtigung der materialbedingten anisotropen Schallausbreitungscharakteristik des Prüfkörpers 8 berücksichtigt wird. In diesem Fall kommt die beschriebene Technik der inversen Phasenanpassung zum Einsatz in dem unter Berücksichtigung der schallakustischen Anisotropie der innerhalb des Prüfkörpers vorhandenen Werkstoffbereiche letztlich eine Anpassung des auszuwertenden detektierten Ultraschallwellenfeldes derart vorgenommen wird, so dass eine quasi Standardprüfsituation geschaffen wird, wie sie auch bei der Auswertung von Ultraschallsignalen durchgeführt wird, die aus akustisch isotropen Prüfkörpern entstammen.

Von besonderem Vorteil ist bei dem lösungsgemäßen Verfahren die Tatsache, dass die gesamte Signalverarbeitung sowie Erfassung der Ultraschallprüfergebnisse nur nach einem oder wenigen "Ultraschallschüssen" nach dem getakteten Gruppenstrahlerprinzip möglich ist. Eine physikalische Abtastung der Prüfkörperoberfläche mit einem steuerbaren Schallstrahl nach dem konventionellen Gruppenstrahlerprinzip ist mit dem lösungsgemäßen Verfahren nicht erforderlich.

Somit ergeben sich für das lösungsgemäße Verfahren folgende weitere Vorteile:
- Eine automatische, rechnerische Anpassung an Oberflächenkonturen in Echtzeit wird möglich.
- Eine schnelle Prüfung von Objekten mit beliebigen Oberflächenkonturen gegebenenfalls mit anisotropen Materialeigenschaften wird ermöglicht und letztlich wird das Fehlemachweisvermögen bei der Prüfung von anisotropen Werkstoffen durch die Technik der inversen Phasenanpassung verbessert.

### Bezugszeichenliste

- 1: Gruppenstrahlerprüfkopf
- 2: Ultraschallwandler
- 3: Ebene
- 4: Koppelelement
- 5: elastische Oberfläche des Koppelelementes
- 6: starre Wand
- 7: Volumen gefüllt mit Flüssigkeit oder Gel
- 8: Prüfkörper
- 9: Prüfkörperoberfläche
- 10: Ultraschallwellen
- 11: Prüfkörperoberfläche
- 12: Fokuspunkte auf Prüfkörperoberfäche
- 13: Materialungänze

## Patentansprüche

1. Verfahren zur zerstörungsfreien Prufkörperuntersuchung mittels Ultraschall längs einer Prüfkörperoberfläche, die insbesondere nicht eben ausgebildet ist, bei dem mit einem oder einer Vielzahl von Ultraschallwandlern Ultraschallwellen mittels eines Koppelmedium über die Prüfkörperoberfläche in den Prüfkörper eingekoppelt und innerhalb des Prüfkörpers reflektierte Ultraschallwellen von einer Vielzahl von Ultraschallwandlern über die Prüfkörperoberfläche und das Koppelmedium empfangen und in Ultraschallsignale umgewandelt werden, die der zerstörungsfreien Untersuchung zugrunde gelegt werden,
**gekennzeichnet durch** folgende Verfahrensschritte:
- Vorsehen und Aktivieren wenigstens eines Ultraschallwandlers derart, dass die über das Koppelmedium und die Prüfkörperoberfläche in den Prüfkörper eingekoppelten Ultraschallwellen sich innerhalb des Prüfkörpers räumlich ausbreiten,
- Empfangen der innerhalb des Prüfkörpers reflektierten und über die Prüfkörperoberfläche und das Koppelmedium zurücklaufenden Ultraschallwellen mit einer Vielzahl m von Ultraschallwandlern und Generieren von m Ultraschallzeitsignalen, in denen zeitaufgelöst Amplitudeninformationen enthalten sind,
- Abspeichern der m Ultraschallzeitsignale,
- Ermitteln einer der Prüfkörperoberfläche zuordenbaren Oberflächenkontur durch rechnerische Fokussierung der empfangenen Ultraschallwellen an wenigstens zwei Oberflächenpunkte der Prüfkörperoberfläche,
- Auswerten der abgespeicherten Ultraschallzeitsignale im Wege einer Rekonstruktion eines 3-dimensionalen Volumenbildes, eines Sektorbildes in Form eines 2-dimensionalen Ultraschallschnittbildes **durch** den Prüfkörpern oder eines A-Bildes in Form eines 1-dimensionalen, längs eines vorgebbaren Einschallwinkels zeit- und ortsaufgelösten Ultraschallechosignals, unter Berücksichtigung einer **durch** die ermittelte Oberflächenkontur hervorgerufene Inhomogenität im Schallausbreitungsverhalten der die Prüfkörperoberfläche passierenden Ultraschallwellen.

2. Verfahren nach Anspruch 1,
**gekennzeichnet durch** folgender Verfahrenschritte,
a) Anordnen einer Vielzahl n in Form eines eindimensionalen Lineararrays oder eines zweidimensionalen Matrixarrays von Ultraschallwandlern beabstandet zur Prüfkörperoberfläche über ein an die Oberflächenkontur anschmiegbares Koppelmedium,
b) Auswählen und Aktivieren eines ersten Ultraschallwandlers oder einer ersten Gruppe mit i Ultraschallwandler aus den n Ultraschallwandlern zum Aussenden von Ultraschallwellen in den Prüfkörper, mit i < n,
c) Empfangen der im Inneren des Prüfkörpers reflektierten Ultraschallwellen mit m Ultraschallwandlern, mit i < m ≤ n, und Generieren von m Ultraschallsignalen,
d) Abspeichern der m Ultraschallsignale,
e) Auswählen und Aktivieren eines anderen Ultraschallwandlers oder einer anderen Gruppe mit i Ultraschallwandlern, die sich wenigstens **durch** einen Ultraschallwandler von der ersten Gruppe unterscheidet zum Aussenden von Ultraschallwellen und Durchführen der Verfahrensschritte c) und d),
f) Wiederholtes Ausführen des Verfahrensschrittes e) mit jeweils der Auswahl eines weiteren Ultraschallwandlers oder einer weiteren Gruppe von i Ultraschallwandlern unter der Maßgabe, dass sich der weitere Ultraschallwandler oder die weitere Gruppe mit i Ultraschallwandlern von einem bereits ausgewählten Ultraschallwandler oder von einer bereits ausgewählten Gruppe mit i Ultraschallwandlern unterscheidet, und
e) Auswerten der abgespeicherten Ultraschallsignale.

3. Verfahren nach Anspruch 2,
**dadurch gekennzeichnet, dass** das Auswählen der i einer Gruppe zugehörigen Ultraschallwandler derart durchgeführt wird, dass unmittelbar benachbarte Ultraschallwandler gemäß eines Linear- oder Flächenarrays ausgewählt werden.

4. Verfahren nach einem der Ansprüche 1 bis 3,
**dadurch gekennzeichnet, dass** das Auswerten der Ultraschallzeitsignale mit einem Rekonstruktionsalgorithmus nach Durchführung der Durchschallung des Prüfkörpers mit Ultraschall, durchgeführt wird, und
dass der Rekonstruktionsalgorithmus unter Maßgabe eines virtuell vorgebbaren Einschallwinkels und/oder Schnittes und/oder 3D-Bereiches mit einer virtuellen Fokussierung der eingekoppelten Ultraschallwellen in den Prüfkörper ausgewählt und auf die abgespeicherten Ultraschallsignale angewendet wird.

5. Verfahren zur Untersuchung eines über akustisch anisotrope Werkstoffbereiche verfügenden Prüfkörpers nach einem der Ansprüche 1 bis 4, **dadurch gekennzeichnet, dass** die Auswertung der abgespeicherten Ultraschallzeitsignale zum Erhalt des rekonstruierten Volumenbildes, Sektorbildes oder A-Bildes mittels einer Phasenanpassung der durch die m Ultraschallwandler empfangenen Ultraschallwellen derart durchgeführt wird, dass Ultraschall-Laufzeiten von jedem als Sender dienenden Ultraschallwandler zu jedem Raumpunkt eines zu rekonstruierenden Prüfkörperbereiches und zurück zu jedem als Empfänger dienenden Ultraschallwandlers unter Berücksichtigung von durch die akustisch anisotropen Werkstoffeigenschaften herrührenden richtungsspezifischen Schallausbreitungseigenschaften ermittelt werden.

6. Verfahren nach Anspruch 5,
**dadurch gekennzeichnet, dass** die richtungsspezifischen Schallausbreitungseigenschaften die richtungsspezifischen Schallausbreitungsgeschwindigkeiten darstellen und dass die richtungsspezifischen Schallausbreitungseigenschaften aus einer den wenigstens einen akustisch anisotropen Werkstoffbereich beschreibenden Steifigkeitsmatrix berechnet oder im Wege einer experimentellen richtungsabhängigen Schallgeschwindigkeitsmessung ermittelt werden.

7. Verfahren nach einem der Ansprüche 2 bis 6,
**dadurch gekennzeichnet, dass** das Empfangen der im Inneren des Prüfkörpers reflektierten Ultraschallwellen mit sämtlichen vorgesehenen Ultraschallwandlern durchgeführt wird, d.h. m = n.

8. Verfahren nach einem der Ansprüche 5 bis 7,
**dadurch gekennzeichnet, dass** der Prüfkörpern vollständig aus einem akustisch anisotropen Werkstoff besteht.

9. Verfahren nach einem der Ansprüche 1 bis 8,
**dadurch gekennzeichnet, dass** das Empfangen der innerhalb des Prüfkörpers reflektierten Ultraschallwellen unter Zugrundelegung der Sampling Phased Array Technik durchgeführt wird.

10. Verfahren nach einem der Ansprüche 1 bis 9,
**dadurch gekennzeichnet, dass** der wenigstens eine Ultraschallwandler in einem einzigen Sendetakt zur Aussendung von Ultraschallwellen pulsartig aktiviert wird.

## Claims

1. A method for the non-destructive examination of a test piece by means of ultrasound along a test piece surface, which in particular is not constituted flat, wherein ultrasonic waves are coupled by means of a coupling medium via the test piece surface into the test piece with one or a plurality of ultrasonic transducers and ultrasonic waves reflected inside the test piece are received by a plurality of ultrasonic transducers via the test piece surface and the coupling medium and converted into ultrasonic signals, which are used as a basis for the non-destructive examination,
**characterised by** the following process steps:
- provision and activation of at least one ultrasonic transducer in such a way that the ultrasonic waves coupled into the test piece via the coupling medium and the test piece surface are propagated spatially inside the test piece,
- reception of the ultrasonic waves reflected inside the test piece and returning via the test piece surface and the coupling medium with a plurality m of ultrasonic transducers and generation of m ultrasonic time signals, in which amplitude information is contained in a time-resolved manner,
- storage of the m ultrasonic time signals,
- determination of a surface contour assignable to the test piece surface by computational focusing of the received ultrasonic waves at at least two surface points of the test piece surface,
- evaluation of the stored ultrasonic time signals by way of a reconstruction of a 3-dimensional volume image, a sector image in the form of a 2-dimensional ultrasonic sectional image through the test piece or an A-image in the form of a 1-dimensional ultrasonic echo signal time- and space-resolved along a preselectable angle of incidence, taking account of an inhomogeneity in the sound propagation behaviour of the ultrasonic waves passing through the test piece surface, said inhomogeneity being caused by the ascertained surface contour.

2. The method according to claim 1,
**characterised by** the following process steps:
a) arrangement of a plurality n, in the form of a one-dimensional linear array or a two-dimensional matrix array, of ultrasonic transducers spaced apart from the test piece surface by a coupling medium capable of conforming to the surface contour,
b) selection and activation of a first ultrasonic transducer or a first group with i ultrasonic transducers out of the n ultrasonic transducers for the transmission of ultrasonic waves into the test piece, where i < n,
c) reception of the ultrasonic waves reflected in the interior of the test piece with m ultrasonic transducers, where i < m ≤ n, and generation of m ultrasonic signals,
d) storage of the m ultrasonic signals,
e) selection and activation of another ultrasonic transducer or another group with i ultrasonic transducers, which differs from the first group at least by one ultrasonic transducer, for the transmission of ultrasonic waves and the performance of process steps c) and d),
f) repeated performance of process step e) with each time the selection of a further ultrasonic transducer or a further group of i ultrasonic transducers, with the condition that the further ultrasonic transducer or the further group with i ultrasonic transducers differs from an already selected ultrasonic transducer or from an already selected group with i ultrasonic transducers, and
g) evaluation of the stored ultrasonic signals.

3. The method according to claim 2,
**characterised in that** the selection of the i ultrasonic transducers belonging to a group is carried out in such a way that directly adjacent ultrasonic transducers are selected according to a linear or two-dimensional array.

4. The method according to any one of claims 1 to 3,
**characterised in that** the evaluation of the ultrasonic signals is carried out with a reconstruction algorithm after the performance of the transmission of ultrasound through the test piece, and
that the reconstruction algorithm is selected according to a virtually pre-selectable angle of incidence and/or cross-section and/or 3D region with a virtual focusing of the coupled-in ultrasonic waves into the test piece and is applied to the stored ultrasonic signals.

5. The method of examining a test piece comprising acoustically anisotropic material regions according to any one of claims 1 to 4,
**characterised in that** the evaluation of the stored ultrasonic signals for the acquisition of the reconstructed volume image, sector image or A-image is carried out by means of a phase adaptation of the ultrasonic waves received by the m ultrasonic transducers in such a way that ultrasonic propagation times from each ultrasonic transducer serving as a transmitter to each spatial point of a test piece region to be reconstructed and back to each ultrasonic transducer serving as a receiver are ascertained taking account of direction-specific sound propagation properties originating from the acoustically anisotropic material properties.

6. The method according to claim 5,
**characterised in that** the direction-specific sound propagation properties represent the direction-specific sound propagation speeds and that the direction-specific sound propagation properties are calculated from a stiffness matrix describing the at least one acoustically anisotropic material region or are ascertained by way of an experimental direction-dependent sound velocity measurement.

7. The method according to any one of claims 2 to 6,
**characterised in that** the reception of the ultrasonic waves reflected in the interior of the test piece is carried out with all the provided ultrasonic transducers, i.e. m = n.

8. The method according to any one of claims 5 to 7,
**characterised in that** the test piece is made completely from an acoustically anisotropic material.

9. The method according to any one of claims 1 to 8,
**characterised in that** the reception of the ultrasonic waves reflected inside the test piece is carried out on the basis of the sampling phased array technique.

10. The method according to any one of claims 1 to 9,
**characterised in that** the at least one ultrasonic transducer is activated in a pulse-like manner in a single transmission cycle for the transmission of ultrasonic waves.

## Revendications

1. Procédé pour contrôle non destructif d'éprouvettes au moyen d'ultrasons le long d'une surface d'éprouvette, qui n'est pas en particulier constituée plane, pour lequel avec un ou une pluralité de transducteurs à ultrasons des ondes ultrasonores sont injectées au moyen d'un milieu de couplage dans les éprouvettes par la surface d'éprouvette et des ondes ultrasonores réfléchies à l'intérieur de l'éprouvette sont reçues par la surface d'éprouvette et le milieu de couplage par une pluralité de transducteurs à ultrasons et sont converties en signaux ultrasonores qui sont à la base du contrôle non destructif,
**caractérisé par** les étapes de procédé suivantes :
- prévision et activation d'au moins un transducteur à ultrasons de telle sorte que des ondes ultrasonores injectées dans l'éprouvette par le milieu de couplage et la surface d'éprouvette se propagent dans l'espace à l'intérieur de l'éprouvette,
- réception des ondes ultrasonores réfléchies à l'intérieur de l'éprouvette et revenant par la surface d'éprouvette et le milieu de couplage avec une pluralité m de transducteurs à ultrasons et génération de m signaux de temps ultrasonores dans lesquels sont contenues des informations d'amplitude à résolution de temps,
- mémorisation des m signaux de temps ultrasonores,
- détermination d'un profil de surface attribuable à la surface d'éprouvette par concentration numérique des ondes ultrasonores reçues sur au moins deux points superficiels de la surface d'éprouvette,
- exploitation des signaux de temps ultrasonores mémorisés par voie d'une reconstruction d'une image volumique tridimensionnelle, d'une image de secteur sous la forme d'une vue en coupe des ultrasons bidimensionnelle à travers l'éprouvette ou d'une vue A sous la forme d'un signal d'écho ultrasonore unidimensionnel à résolution de temps et de lieu le long d'un angle d'entrée d'ultrasons spécifiable en tenant compte d'une inhomogénéité causée par le profil de surface déterminé dans le comportement de propagation des sons des ondes ultrasonores passant par la surface d'éprouvette.

2. Procédé selon la revendication 1 **caractérisée par** les étapes de procédé suivantes :
a) disposition d'une pluralité n sous la forme d'un réseau linéaire unidimensionnel ou d'un réseau matriciel bidimensionnel de transducteurs à ultrasons à distance de la surface d'éprouvette par un milieu de couplage adaptable au profil de surface,
b) sélection et activation d'un premier transducteur à ultrasons ou d'un premier groupe avec i transducteurs à ultrasons à partir de n transducteurs à ultrasons pour envoi des ondes ultrasonores dans l'éprouvette, avec i < n,
c) réception des ondes ultrasonores réfléchies à l'intérieur de l'éprouvette avec m transducteurs à ultrasons, avec i < m ≤ n, et génération de m signaux ultrasonores,
d) mémorisation des m signaux ultrasonores,
e) sélection et activation d'un autre transducteur à ultrasons ou d'un autre groupe avec i transducteurs à ultrasons qui se différencie au moins du premier groupe par un transducteur à ultrasons pour envoyer des ondes ultrasonores et exécuter les étapes de procédé c) et d),
f) exécution répétée de l'étape de procédé e) avec à chaque fois la sélection d'un autre transducteur à ultrasons ou d'un autre groupe de i transducteurs à ultrasons en raison du fait que l'autre transducteur à ultrasons ou l'autre groupe avec i transducteurs à ultrasons se différencie d'un transducteur à ultrasons déjà sélectionné ou d'un groupe déjà sélectionné avec i transducteurs à ultrasons, et
g) exploitation des signaux ultrasonores mémorisés.

3. Procédé selon revendication 2 **caractérisée en ce que** la sélection des i transducteurs à ultrasons appartenant à un groupe est réalisée de telle façon que les transducteurs à ultrasons directement voisins sont sélectionnés selon un réseau linéaire ou superficiel.

4. Procédé selon une quelconque des revendications 1 à 3 **caractérisée en ce que** l'exploitation des signaux de temps ultrasonores est effectuée avec un algorithme de reconstruction après exécution de l'examen aux ultrasons de l'éprouvette avec des ultrasons et **en ce que** l'algorithme de reconstruction est sélectionné en raison d'un angle d'entrée d'ultrason et/ou d'une section et/ou d'une zone tridimensionnelle virtuellement spécifiables avec une concentration virtuelle des ondes ultrasonores injectées dans l'éprouvette et est appliqué aux signaux ultrasonores mémorisés.

5. Procédé pour le contrôle d'une éprouvette disposant de zones de matériau acoustiquement anisotropes selon une quelconque des revendications 1 à 4 **caractérisée en ce que** l'exploitation des signaux ultrasonores mémorisés pour obtenir l'image volumique, l'image de secteur ou l'image A reconstruite est effectuée au moyen d'une adaptation de phase des ondes ultrasonores reçues par les m transducteurs à ultrasons de telle façon que les durées d'ultrasons sont déterminées par chaque transducteur à ultrasons servant d'émetteur à chaque point spatial d'une zone d'éprouvette à reconstruire et en retour à chaque transducteur à ultrasons servant de récepteur en tenant compte des propriétés de propagation de son spécifiques à la direction venant des propriétés du matériau acoustiquement anisotropes.

6. Procédé selon le procédé 5 **caractérisée en ce que** les propriétés spécifiques à la direction représentent les vitesses de propagation de son spécifiques à la direction et **en ce que** les propriétés de propagation de son spécifiques à la direction sont calculées à partir d'une matrice de rigidité décrivant la au moins une zone de matériau acoustiquement anisotrope ou sont déterminées par voie d'une mesure de vitesse du son expérimentale dépendant de la direction.

7. Procédé selon une quelconque des revendications 2 à 6 **caractérisé en ce que** la réception des ondes ultrasonores réfléchies à l'intérieur de l'éprouvette est effectuée avec tous les transducteurs à ultrasons prévus, c'est-à-dire m = n.

8. Procédé selon une quelconque des revendications 5 à 7 **caractérisé en ce que** l'éprouvette est complètement constituée d'un matériau acoustiquement anisotrope.

9. Procédé selon une quelconque des revendications 1 à 8 **caractérisé en ce que** la réception des ondes ultrasonores réfléchies à l'intérieur de l'éprouvette est effectuée en s'appuyant sur la technique de réseau en phase pour éprouvettes.

10. Procédé selon une quelconque des revendications 1 à 9 **caractérisé en ce que** le au moins un transducteur à ultrasons est activé sous forme d'impulsions dans un rythme d'envoi unique pour envoyer des ondes ultrasonores.
